# EUROPÄISCHE PATENTANMELDUNG

(11) **EP 1 799 001 A1**
(43) Veröffentlichungstag der Anmeldung: **20.06.2007**
(21) Anmeldenummer: 05027545.2
(22) Anmeldetag: 15.12.2005
(51) Int. Cl.: H04Q 7/36

(54) **Verfahren zum Zuweisen von Ressourcen auf Frequenzbändern eines Funkkommunikationssystems sowie Netzvorrichtung und Teilnehmerstation**

(71) Anmelder: SIEMENS AKTIENGESELLSCHAFT, 80333 München (DE)
(72) Erfinder: Eichinger, Josef Martin, 85464 Neufinsing (DE); Lott, Matthias, Dr., 82061 Neuried (DE); Schulz, Egon, Dr., 80993 München (DE); Zirwas, Wolfgang, 82194 Gröbenzell (DE)

(57) **Zusammenfassung**

Die Erfindung bezieht sich auf ein Verfahren zum Zuweisen von Ressourcen auf Frequenzbänder (F1, F2) eines Funkkommunikationssystems, bei dem
- Ressourcen eines ersten und eines zweiten zweier zueinander beabstandeter FDD-Frequenzbänder (F1, F2) für Übertragungen mittels eines TDD-Übertragungsverfahrens zugewiesen werden,
- wobei die Ressourcen im ersten FDD-Frequenzband (F1) für Übertragungen gemäß FDD in Aufwärtsrichtung (UL) und für Übertragungen gemäß TDD überwiegend in Aufwärtsrichtung (UL) als übergeordneter Übertragungsrichtung (mg) und untergeordnet in Abwärtsrichtung (DL) als untergeordneter Übertragungsrichtung (ug) zugewiesen werden,
- wobei die Ressourcen im zweiten FDD-Frequenzband (F2) für Übertragungen gemäß FDD in Abwärtsrichtung (DL) und für Übertragungen gemäß TDD überwiegend in Abwärtsrichtung (DL) als übergeordneter Übertragungsrichtung (mg) und untergeordnet in Aufwärtsrichtung (UL) als untergeordneter Übertragungsrichtung (ug) zugewiesen werden und
- wobei für Zeiträume (ts) einer Zuweisung von Ressourcen für eine der untergeordneten Übertragungsrichtungen (ug) im ersten und im zweiten Frequenzband (F1, F2) keine Ressourcen für Übertragungen gemäß FDD in entgegengesetzter Übertragungsrichtung zu dieser untergeordneten Übertragungsrichtung (ug) zugewiesen werden.

## Beschreibung

Die Erfindung bezieht sich auf ein Verfahren zum Zuweisen von Ressourcen auf Frequenzbändern eines Funkkommunikationssystems sowie eine entsprechende Netzvorrichtung und eine entsprechende Teilnehmerstation.

Zukünftige mobile Funkkommunikationssysteme sollen sowohl Übertragungen im Kurzbereich als auch im Weitbereich zwischen einer zentralen Basisstation und mobilen Stationen ermöglichen. Für den Kurzbereich ist die Anwendung des so genannten TDD (Time Division Duplex/Duplex-Zeitaufteilung) vorteilhaft, da diese Verfahrensweise es ermöglicht, eine Kanalabschätzung des Kanals in Abwärtsrichtung (DL: Downlink) aus Übertragungen in Aufwärtsrichtung (UL: Uplink) aufgrund der Reziprozität des Funkkanals durchzuführen. Dabei handelt es sich beispielsweise um ein bedeutendes Merkmal für so genannte MIMO-Systeme (MIMO: Multiple Input Multiple Output Antennas / mehrere Empfangs-, mehrere Sende-Antennen) mit einem räumlichen Multiplexen oder für so genannte Multi-Hop-Netze.

Da räumliches Multiplexen (SMUX: Spatial Multiplexing) eine Kanalschätzung mit hoher Genauigkeit und Signal-zu-Rausch-Verhältnisse höher als etwa 11 dB erforderlich macht, wird räumliches Multiplexen derzeit als eine typische Kurzbereichs-Technologie für Übertragungen bis zu etwa 200 m angesehen. Falls TDD zusammen mit räumlichem Multiplexen in einer begrenzten Anzahl von Hotspots verwendet wird, vermeidet eine räumliche Trennung zwischen verschiedenen Hotspots die allgemein bekannte Interferenz zwischen Basisstationen, welche als ein Hauptnachteil von TDD angesehen wird.

Für zellulare Weitbereichs-Systeme wird FDD (Frequency Division Duplex / Duplex-Frequenz-Aufteilung) aufgrund der wohldefinierten Interferenzbedingungen bevorzugt. FDD kann als Vollduplex (Full Duplex) mit einem Diplexer-Filter (Diplexer/Antennen-Weiche) zum Trennen von Übertragungen in Abwärtsverbindung und Aufwärtsverbindung verwendet werden. Alternativ kann FDD als Halbduplex (Half Duplex) verwendet werden, wobei jede mobile Station zu einem jeweiligen Zeitschlitz entweder nur sendet oder nur empfängt, so dass ein Schalter zusammen mit einem schnell steuerbaren lokalen Oszillator den Diplexer ersetzen kann. Statt eines schnell steuerbaren Oszillators gibt es bei Halbduplex-FDD zusätzlich auch die Möglichkeit, zwischen unterem und oberem Frequenz- bzw. Seitenband umzuschalten. Das erlaubt billigere Oszillatorlösungen.

Allgemein diskutiert werden Vorschläge zur Umsetzung von TDD, FDD und Halbduplex-FDD sowie mögliche Kombinationen unter diesen.

GB 2 398 455 A beschreibt einen TDD-Betrieb in einem FDD-Band. Die verfügbaren Ressourcen eines ersten von zwei FDD-Frequenzbändern werden dabei in Zeitschlitze unterteilt und symmetrisch für TDD-Aufwärtsverbindungen und TDD-Abwärtsverbindungen zugewiesen. Bei diesem FDD-Frequenzband handelt es sich um ein üblicherweise als FDD-Aufwärtsverbindungs-Frequenzband verwendetes Frequenzband. Zusätzlich wird das zugeordnete Duplex-Frequenzband, das heißt ein FDD-Abwärtsverbindungs-Frequenzband, bei Bedarf für zur Interferenzvermeidung ausdrücklich nur TDD-Abwärtsverbindungen genutzt. Bei dieser Verfahrensweise werden somit Übertragungen gemäß TDD anstelle von Übertragungen gemäß FDD in einem Duplex-FDD-Frequenzband durchgeführt.

Die Aufgabe der Erfindung besteht darin, ein Verfahren zum Zuweisen von Ressourcen auf Frequenzbändern eines Funkkommunikationssystems mit Blick auf eine bessere Systemauslastung und mit Blick auf die Möglichkeit von Zuweisungen von Ressourcen zu Stationen im Kurzbereich bzw. Stationen im Weitbereich effizienter zu gestalten. Dabei sollen typische schlechte Interferenz-Bedingungen zwischen z. B. Basisstationen bzw. Netz-Zugangsstationen, wie sie von TDD bekannt sind, vermieden werden, während eine hohe Flexibilität hinsichtlich einer Asymmetrie bei Übertragungen beibehalten bleiben soll. Insbesondere soll die ansonsten schwierig zu handhabende Abstimmung von Frequenzband-Nutzungen zwischen Basisstationen an einem Ort aber von verschiedenen Betreibern mit einem geringen Synchronisations-Aufwand einfach ermöglicht werden.

Diese Aufgabe wird gelöst durch das Verfahren sowie die Netzvorrichtung und die Teilnehmerstation gemäß den unabhängigen Ansprüchen. Vorteilhafte Ausgestaltungen sind Gegenstand abhängiger Ansprüche.

Bevorzugt wird demgemäß ein Verfahren zum Zuweisen von Ressourcen auf Frequenzbänder eines Funkkommunikationssystems, bei dem Ressourcen eines ersten und eines zweiten zweier zueinander beabstandeter FDD-Frequenzbänder für Übertragungen mittels eines TDD-Übertragungsverfahrens zugewiesen werden, wobei die Ressourcen im ersten FDD-Frequenzband für Übertragungen gemäß FDD in Aufwärtsrichtung und für Übertragungen gemäß TDD überwiegend in Aufwärtsrichtung als übergeordneter Übertragungsrichtung und untergeordnet in Abwärtsrichtung als untergeordneter Übertragungsrichtung zugewiesen werden, wobei die Ressourcen im zweiten FDD-Frequenzband für Übertragungen gemäß FDD in Abwärtsrichtung und für Übertragungen gemäß TDD überwiegend in Abwärtsrichtung als übergeordneter Übertragungsrichtung und untergeordnet in Aufwärtsrichtung als untergeordneter Übertragungsrichtung zugewiesen werden und wobei für Zeiträume einer Zuweisung von Ressourcen für eine der untergeordneten Übertragungsrichtungen im ersten und im zweiten Frequenzband keine Ressourcen für Übertragungen gemäß FDD in entgegengesetzter Übertragungsrichtung zu dieser untergeordneten Übertragungsrichtung zugewiesen werden.

Während der Zeiträume der Zuweisung von Ressourcen für eine der untergeordneten Übertragungsrichtungen werden im ersten und im zweiten Frequenzband vorzugsweise nur Ressourcen für Übertragungen gemäß TDD zugewiesen.

Besonders vorteilhaft ist ein Verfahren, bei welchem das derartige Zuweisen der Ressourcen für die untergeordnete Übertragungsrichtung bevorzugt unter Berücksichtigung aller Sub-Frequenzbänder des ersten und des zweiten Frequenzbandes synchronisiert durchgeführt wird. Zweckmäßig ist ein Verfahren, bei welchem Sub-Frequenzbänder verschiedener Basisstationen mit überlappenden Sendebereichen und mit eigenständiger Ressourcenzuweisung durch deren Betreiber bezüglich der Zuweisung der Ressourcen für die untergeordneten Übertragungsrichtungen zueinander synchronisiert betrieben werden.

Für Übertragungen gemäß TDD werden in der untergeordneten Übertragungsrichtung nur zeitlich aufeinanderfolgend bis zu 20%, insbesondere bis zu 10% der Ressourcen im Vergleich zu Übertragungen gemäß TDD in der entgegengesetzten übergeordneten Übertragungsrichtung zugewiesen. Dies ist insbesondere dann vorteilhaft, wenn Übertragungen in der für ein Frequenzband untergeordneten Richtung in dem anderen Frequenzband durchgeführt werden können.

Jeweils ein Sub-Frequenzband des ersten und des zweiten Frequenzbandes kann vorteilhaft als ein FDD-Steuerkanal zugewiesen werden. Während einer zeitlich gleichzeitigen Zuweisung von weiteren Sub-Frequenzbändern wird dann vorteilhaft für die untergeordnete Übertragungsrichtung gemäß TDD der Steuerkanal entweder als Untätigkeitslücke ungenutzt gelassen oder für eine Übertragung gemäß TDD zugewiesen.

Im jeweiligen Frequenzband können Ressourcen für Übertragungen gemäß TDD in der übergeordneten Übertragungsrichtung für einen Teil von Sub-Frequenzbändern zugewiesen werden und für Übertragungen gemäß FDD können in der jeweils gleichen Übertragungsrichtung innerhalb des Frequenzbandes weitere der Sub-Frequenzbänder zugewiesen werden.

Ressourcen eines Frequenz-Schutzbandes können zwischen dem ersten und dem zweiten Frequenzband zeitweilig für TDD-Übertragungen als zusätzliche Sub-Frequenzbänder zugewiesen werden, wodurch eine sehr einfache und flexible Anpassung an momentane Verkehrslast ermöglicht wird. In dieser Hinsicht vorteilhaft ist auch möglich, dass unter Verschiebung des Frequenz-Schutzbandes zwischen dem ersten und dem zweiten Frequenzband dem ersten Frequenzband zeitweilig weniger Sub-Frequenzbänder zugewiesen werden, als dem zweiten Frequenzband zugewiesen werden.

Innerhalb eines Zeitabschnitts kann ein Unterzeitabschnitt für Übertragungen gemäß FDD, ein Unterzeitabschnitt für Übertragungen gemäß TDD in der übergeordneten Übertragungsrichtung und ein Unterzeitabschnitt für Übertragungen gemäß TDD in der untergeordneten Übertragungsrichtung zugewiesen werden, was ebenfalls eine variable Anpassung an momentane Lastbedingungen ermöglicht.

Bei Übertragungen gemäß FDD werden Ressourcen zweckmäßig für Halbduplex-FDD-Übertragungen zugewiesen.

Die erfindungsgemäße Teilnehmerstation und die erfindungsgemäße Netzvorrichtung weisen jeweils alle Merkmale auf, die zur Durchführung des erfindungsgemäßen Verfahrens benötigt werden. Insbesondere können jeweils entsprechende Mittel zur Durchführung der einzelnen Verfahrensschritte oder Verfahrensvarianten vorgesehen sein.

Der Grundgedanke besteht somit darin, zwei Frequenzbänder als zwei mehr oder weniger gekoppelte TDD-Frequenzbänder zu kombinieren, wobei die Frequenzbänder nicht nur als reine TDD-Frequenzbänder sondern in Kombination auch als Halbduplex-FDD-Frequenzbänder für insbesondere Übertragungen im Weitbereich verwendet werden. Dabei wird ein erstes der Frequenzbänder überwiegend für Übertragungen in Abwärtsrichtung und ein zweites der Frequenzbänder überwiegend für Übertragungen in Aufwärtsrichtung verwendet. Dabei kann das erste Frequenzband niedrigere Frequenzen als das zweite Frequenzband aufweisen und umgekehrt. Ein besonderes Merkmal besteht darin, dass eines der beiden Frequenzbänder für ausschließlich FDD-Übertragungen in Abwärtsrichtung, für überwiegend TDD-Übertragungen in Abwärtsrichtung und für nur untergeordnet für TDD-Übertragungen in Aufwärtsrichtung verwendet wird, während das andere der Frequenzbänder umgekehrt nur für Übertragungen in Aufwärtsrichtung gemäß FDD, überwiegend für Übertragungen in Aufwärtsrichtung gemäß TDD und nur untergeordnet für Übertragungen in Abwärtsrichtung gemäß TDD verwendet wird. In einem Frequenzband liegt das Verhältnis von Übertragungen gemäß TDD in Aufwärtsrichtung und Abwärtsrichtung dabei vorzugsweise so, dass beispielsweise 90 % der Zeit für TDD-Übertragungen in der gleichen Richtung übertragen wird, in der gemäß beispielsweise einem Halbduplex-Schema FDD-Übertragungen in dem Frequenzband erfolgen, während zeitlich gesehen nur ca. 10 % in umgekehrter Richtung gemäß TDD übertragen wird.

Dadurch kann sowohl symmetrischer Verkehr als auch asymmetrischer Verkehr unterstützt werden, wobei nur das Halbduplex-Frequenzband geändert wird. Die typischen schädlichen Interferenzbedingungen, d.h. Übertragungen in Aufwärts- und Abwärtsrichtung im gleichen Zeitraum (z.B. einer oder mehrere Zeitschlitze) können vollständig dadurch vermieden werden, dass während Zeiträumen, in denen in einem Zeitabschnitt eine untergeordneten Übertragung mittels TDD vorgesehen ist, eine Untätigkeitslücke (Idle-Gap) für die FDD-Übertragung eingesetzt wird. D.h. mittels FDD wird in diesen Zeiträumen eines Zeitabschnitts (z.B. eines Übertragungsrahmens) nicht übertragen. Dies ist möglich unter Annahme synchronisierter Basisstationen. Mit einer in Bezug auf die Dauer eines Zeitabschnittes kurzen Zeitdauer einer Untätigkeitslücke, kann der Gesamtverlust der FDD-Übertragung in einem Zeitabschnitt auf einen sehr geringen Wert, beispielsweise auf weniger als 10 % beschränkt werden.

Ein Ausführungsbeispiel und entsprechende Ausgestaltungen werden nachfolgend anhand der Zeichnungen näher erläutert. Es zeigen:
- Fig. 1: beispielhaft eine Basisstation mit Funkverbindungen zu mobilen Stationen sowie ein Zuweisungsschema für Ressourcen auf verfügbaren Frequenzbändern eines Funkkommunikationssystems und
- Fig. 2 - 4: alternative Zuweisungsschemata zum Zuweisen von Ressourcen auf Frequenzbändern eines Funkkommunikationssystems gemäß Figur 1.

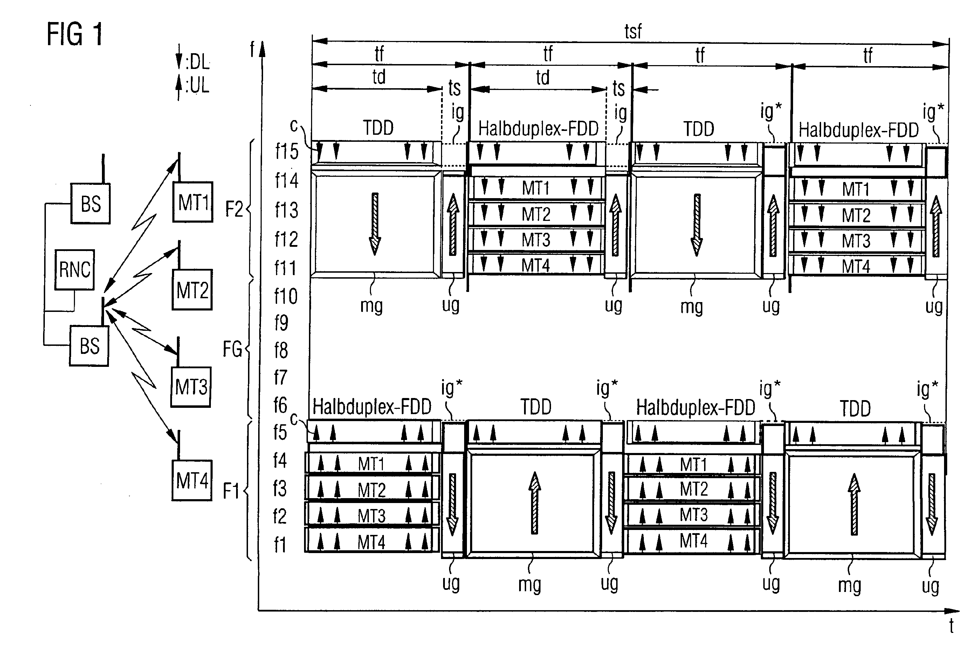

Figur 1 zeigt die Situation zweier beispielhafter Basisstationen BS, welche über eine Steuereinrichtung RNC als einer Netzvorrichtung zum Zuweisen von Funk-Ressourcen und/oder zum Koordinieren von Ressourcen auf Frequenzbändern eines Funkkommunikationssystems verbunden sind. Optional können dabei die beiden Basisstationen BS verschiedenen Betreibern (Operator) zugeordnet sein, welche direkt über eine solche zwischengeschaltete Steuereinrichtung RNC oder durch wechselseitige Synchronisierung aufgrund von von der jeweils anderen Basisstation BS empfangenen Signalen eine Synchronisierung vornehmen. Unter Basisstation BS ist dabei nicht zwingend eine Basisstation eines bestimmten Funkkommunikationssystems zu verstehen, sondern im weiteren Sinne eine Zugangseinrichtung für funkgestützte mobile Stationen. Die Basisstationen BS kommunizieren über Funkschnittstellen mit Stationen MT1, MT2, MT3, MT4, welche allgemein auch als Mobilfunkgeräte oder mobile Terminals bezeichnet werden. Für die Synchronisation mehrerer solcher Basisstationen BS untereinander ist die Steuereinrichtung RNC zum Zuweisen von Funk-Ressourcen oder zum Koordinieren von Ressourcen nicht zwingend erforderlich. Vorteilhaft umsetzbar ist die Synchronisation von Basisstationen BS auch über die Luft durchführbar, wobei z.B. eine oder mehrere Basisstationen BS die Synchronisierung bzw. Koordinierung selbst übernehmen.

Für das Funkkommunikationssystem bzw. die Basisstationen BS steht für die Kommunikation mit den mobilen Stationen MT1, MT2, MT3, MT4 ein Frequenzbereich zur Verfügung, welcher in eine Vielzahl einzelner Frequenzbänder F1, FG, F2 mit Sub-Frequenzbändern f1, f2, ..., f15 unterteilt ist. Als Ressourcen, welche verschiedenen der mobilen Stationen MT1, MT2, MT3, MT4 auf den Frequenzbändern zugewiesen werden können, stehen somit die einzelnen Sub-Frequenzbänder f1, f2, ..., f15 zur Verfügung, wobei die Sub-Frequenzbänder f1, f2, ..., f15 des verfügbaren Frequenzbereichs f abhängig von der Zeit t jeweils verschiedenen der mobilen Stationen MT1, MT2, MT3, MT4 zugewiesen werden können. Außerdem kann die Zuweisung dieser derart gebildeten Ressourcen gemäß verschiedener Übertragungssysteme mit fester Zuordnung von Sub-Frequenzbändern gemäß FDD bzw. Halbduplex-FDD einerseits oder mit Zuweisung von Zeitschlitzen gemäß TDD erfolgen.

Die mobilen Stationen MT1, MT2, MT3, MT4 sind beispielsweise für einen Betrieb sowohl mittels TDD als auch mittels FDD ausgelegt. Weiterhin können sie im TDD-Betrieb sowohl Ressourcen im ersten Frequenzband F1 als auch im zweiten Frequenzband belegen. Beispielsweise kann ein Wechsel zwischen den Frequenzbändern F1, F2 von einer mobilen Station sowohl im FDD-Betrieb als auch im TDD-Betrieb von einem Zeitabschnitt tf zum nächsten erfolgen. Selbstverständlich können auch längere oder kürzere Zeiten für Frequenzwechsel zwischen den Frequenzbändern F1, F2 vorgesehen sein.

Bei den Sub-Frequenzbändern f1, f2, ..., f15 handelt es sich beispielsweise um so genannte Subträger, die beispielsweise für OFDM (Orthogonal Frequency Division Multiplexing) und/oder OFDMA (Orthogonal Frequency Division Multiple Access) verwendet werden.

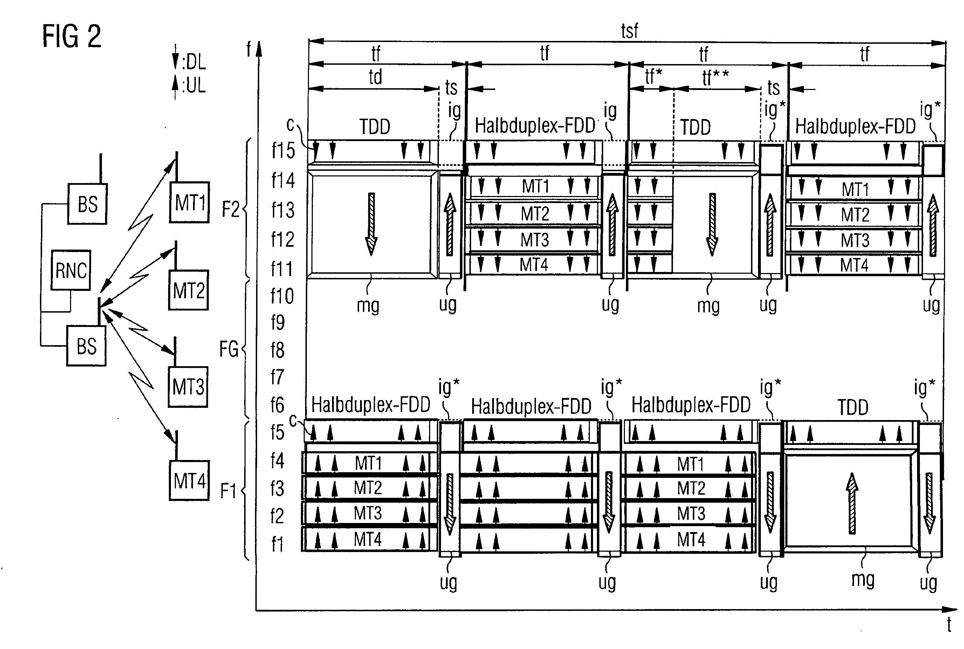

Zur Veranschaulichung des Zuweisens von Ressourcen auf den Frequenzbändern F1, F2 bzw. den Sub-Frequenzbändern f1, f2, ..., f15 wird für eine beispielhafte Betrachtung gemäß dem Diagramm aus Figur 1 und den weiteren Figuren 2, 3 und 4 ein übergeordneter Zeitbereich als Superrahmen tsf festgelegt, welcher wiederum in einzelne Zeitabschnitte tf, so genannte Übertragungsrahmen, untergliedert ist. Außerdem findet eine Untergliederung in drei Frequenzbänder F1, FG, F2 statt, wobei zum Zuweisen von Ressourcen für die Übertragung zwischen der Basisstation BS und den mobilen Stationen MT1, MT2, MT3, MT4 ein erstes Frequenzband F1 mit beispielsweise fünf Sub-Frequenzbändern f1, f2, f3, f4, f5 und ein zweites Frequenzband F2 mit beispielsweise weiteren fünf Sub-Frequenzbändern f11, f12, f13, f14, f15 verwendet wird. Zwischen dem ersten und dem zweiten Frequenzband F1, F2 ist in für FDD bekannter Art und Weise ein Frequenz-Schutzband FG (Frequency Guard Band) angeordnet, das in diesem Ausführungsbeispiel aus fünf weiteren Sub-Frequenzbändern f6, f7, f8, f9, f10 besteht.

Gemäß einer Grundaufteilung des bevorzugten Verfahrens zum Zuweisen von Ressourcen wird das erste Frequenzband F1 für Übertragungen in Aufwärtsrichtung gemäß FDD bzw. Halbduplex-FDD während eines Teils der Zeitabschnitte tf des Superrahmens tsf zugewiesen, während während anderer der Zeitabschnitte tf des Superrahmens tsf das erste Frequenzband F1 für überwiegend Übertragungen gemäß TDD in Aufwärtsrichtung UL als für das erste Frequenzband F1 übergeordneter Übertragungsrichtung mg und nur untergeordnet für Übertragungen gemäß TDD in Abwärtsrichtung DL als für das erste Frequenzband F1 untergeordneter Übertragungsrichtung ug zugewiesen wird. Das Zuweisen von Ressourcen in dem zweiten Frequenzband F2 erfolgt in umgekehrter Weise, indem ein Teil der Zeitabschnitte tf des Superrahmens tsf für Halbduplex-FDD-Übertragungen in Abwärtsrichtung DL als für das zweite Frequenzband F2 übergeordneter Übertragungsrichtung mg und ein anderer Teil der Zeitabschnitte tf des Superrahmens tsf gemäß TDD für überwiegend Übertragungen in Abwärtsrichtung DL und untergeordnet Übertragungen in Aufwärtsrichtung UL als für das zweite Frequenzband F2 untergeordneter Übertragungsrichtung ug verwendet wird. Die Aufteilung zwischen Übertragungen in Abwärtsrichtung DL und Aufwärtsrichtung UL gemäß TDD erfolgt in den jeweiligen Zeitabschnitten tf der Frequenzbänder F1, F2 dabei so, dass vorzugsweise weniger als 20%, bevorzugt 10% oder weniger der Übertragungen in entgegengesetzter Übertragungsrichtung im Vergleich zu den Übertragungen gemäß FDD bzw. Halbduplex-FDD benachbarter Zeitabschnitte tf des gleichen Frequenzbandes F1 bzw. F2 erfolgt.

Außerdem werden die beiden Frequenzbänder F1, F2 vorzugsweise derart zueinander synchronisiert, dass während Übertragungen gemäß TDD in der untergeordneten Übertragungsrichtung ug in einem der Frequenzbänder F1, F2 jeweils auch entsprechende Übertragungen in der untergeordneten Übertragungsrichtung ug in dem anderen der Frequenzbänder F1, F2 durchgeführt werden.

Vorzugsweise sind die beiden Frequenzbänder F1, F2 hinsichtlich der Zeitabschnitte tf zueinander synchronisiert.

Bevorzugt findet eine systemweite Synchronisierung der gesamten Sub-Frequenzbänder f1, f2, ..., f15 auf die Zeiträume ts bzw. Zeitintervalle der untergeordneten Übertragungsrichtung ug statt. Ein Zeitraum ts besteht beispielsweise aus einem oder mehreren Zeitschlitzen. Besonders bevorzugt werden Ausführungsformen, bei denen stets nur in einem der beiden Frequenzbänder F1, F2 eine Übertragung gemäß TDD in der übergeordneten Übertragungsrichtung mg durchgeführt wird, wobei in dem anderen der beiden Frequenzbänder F2, F1 zeitgleich Übertragungen gemäß FDD bzw. Halbduplex-FDD durchgeführt werden.

Vorzugsweise kann jeweils eines der beiden Sub-Frequenzbänder f5, f15 als FDD-Steuer- bzw. Kontrollkanal c für die Verwaltung des Zuweisens von Ressourcen und für die Verwaltung der Synchronisierung verwendet werden. Optional ist dabei möglich, während Übertragungen in der untergeordneten Übertragungsrichtung ug entweder gar keine Übertragung auf dem FDD-Steuerkanal c zuzulassen, so dass eine Untätigkeitslücke ig entsteht, oder die entsprechenden Sub-Frequenzbänder f5, f15 des FDD-Steuerkanals c für Übertragungen ig* gemäß TDD in der jeweils untergeordneten Übertragungsrichtung zuzuweisen.

Bei dem Zuweisen von Ressourcen wird mit Blick auf die Zuweisung gemäß TDD somit eine Unterteilung der Zeitabschnitte tf in einen ersten Unterzeitabschnitt td für die übergeordnete Übertragungsrichtung mg bzw. Haupt-Übertragungsrichtung und einen Zeitraum ts für die untergeordnete Übertragungsrichtung ug vorgenommen.

Bei diesem Grundkonzept werden zwei Frequenzbänder F1, F2 von einem Frequenz-Schutzband FG getrennt, wie dies von FDD bekannt ist. Für die Zuweisung von Ressourcen gemäß Halbduplex-FDD kann eine FDMA-Komponente (FDMA: Frequency Division Multiple Access / Mehrfachzugriffs-Frequenzaufteilung) ermöglichen, mehrere Stationen MT1, MT2, MT3, MT4 bzw. Teilnehmer einzuplanen, indem diese verschiedenen Subträgern in Form der Sub-Frequenzbänder f4, f3, f2, f1, f14, f13, f12, f11 zugewiesen werden. Jeweils eines der Sub-Frequenzbänder f5, f15 kann optional als FDD-Steuerkanal c für Übertragungen gemäß FDD verwendet werden.

Über die Zeit t werden den Sub-Frequenzbänder f1, f2, f3, f4, f5, f11, f12, f13, f14, f15 jeweils beispielsweise zeitschlitzweise oder zeitabschnittsweise gemeinsam Datenblöcke zugeordnet, wobei die Übertragungsrichtung zum Vermeiden von Interferenzzuständen innerhalb der Frequenzbänder F1 bzw. F2 für die jeweils zeitlich und hinsichtlich der Frequenz der Sub-Frequenzbänder benachbarten Datenblöcke überwiegend in entweder nur Aufwärtsrichtung UL oder nur Abwärtsrichtung DL erfolgt. Lediglich bei Datenblöcken, welche für Übertragungen gemäß TDD zugewiesen werden, erfolgt während sehr kurzer Zeiträume ts eine Übertragung in der entgegengesetzten Übertragungsrichtung.

Während der untergeordneten Übertragungsrichtung ug würden in traditionellen Systemen signifikante und schwer zu handhabende Interferenzzustände entstehen, weil gleichzeitig im gleichen Frequenzband Übertragungen in der übergeordneten Übertragungsrichtung des Frequenzbandes stattfinden würden. Als eine Gegenmaßnahme findet eine Synchronisierung des gesamten zellularen Systems des Funkkommunikationssystems derart statt, dass vorzugsweise die untergeordnete Übertragungsrichtung ug für alle Sub-Frequenzbänder auf die beispielhaft dargestellten kurzen Zeiträume ts synchronisiert wird. Durch diese Synchronisierung erlangen alle Basisstationen oder weitere diesen netzseitig hintergeordnete und für eine Zuweisung relevante Stationen genau Kenntnis, wann solche Zeiträume ts mit Interferenz auftreten können, so dass das Einteilen bzw. Zuweisen von Ressourcen für die Benutzung durch die mobilen Stationen MT1, MT2, MT3, MT4 in der übergeordneten Übertragungsrichtung zu diesen Zeiträumen ts vermieden werden kann. Diese Zeiträume ts für die untergeordnete Übertragungsrichtung ug werden für TDD-Übertragung durch die Basisstationen selber verwendet, so dass alle TDD-Stationen eine Übertragung in der jeweils gleichen Richtung vornehmen oder anderenfalls eine höhere Kollisionswahrscheinlichkeit in Kauf nehmen müssten.

Für traditionelle TDD-Systeme wird der Schaltpunkt zwischen Übertragungen in Abwärtsrichtung DL oder Aufwärtsrichtung UL entweder in der Mitte eines Rahmens zum Erzielen von Symmetrie oder außermittig zum Erzielen asymmetrischen Verkehrs gelegt. Dadurch kann der Kapazitätsverlust für das Gesamtsystem in dem Fall, dass nur wenige TDD-Stationen verfügbar sind, sehr hoch werden. Um diesen Nachteil zu vermeiden, werden die Zeiträume ts für Übertragung in umgekehrter Richtung, das heißt für Übertragung in der untergeordneten Übertragungsrichtung ug im Vergleich mit der Dauer bzw. Länge der Zeitabschnitte tf auf einen sehr geringen Wert gesetzt. Entsprechend ist der Zeitraum ts für die untergeordnete Übertragungsrichtung ug bzw. Übertragungen entgegen der Haupt-Übertragungsrichtung, d.h. entgegen der übergeordneten Übertragungsrichtung des jeweiligen Frequenzbandes F1, F2 vorzugsweise nur auf einen oder wenige Zeitschlitze pro Zeitabschnitt tf begrenzt. Dies würde jedoch zu einem sehr asymmetrischen Verkehr für ein konventionelles TDD-System führen. Gemäß dem beschriebenen Ausführungsbeispiel werden daher die beiden Frequenzbänder F1, F2 kombiniert eingeplant, so dass Datenübertragungen mittels TDD in Aufwärtsrichtung UL oder in Abwärtsrichtung DL vorzugsweise über das entsprechende Aufwärtsrichtungs-/ Abwärtsrichtungs-FDD-Frequenzband durchgeführt wird. Dadurch wird erreicht, dass über beide Frequenzbänder F1, F2 betrachtet ein symmetrischer Verkehr erzielbar ist.

Alternativ oder zusätzlich zu einem Betrieb mit TDD besteht, wie in Figur 1 dargestellt, auch die Möglichkeit, den vier mobilen Stationen MT1, MT2, MT3, MT4 für Übertragungen in Aufwärtsrichtung UL jeweils für Halbduplex-FDD ein FDD-Sub-Frequenzband f4, f3, f2, f1 während des ersten und des dritten Zeitabschnitts tf in Aufwärtsrichtung UL in dem ersten Frequenzband F1 zuzuordnen. Für Übertragungen in Abwärtsrichtung DL wird den Stationen MT1, MT2, MT3, MT4 hingegen jeweils ein Sub-Frequenzband f14, f13, f12, f11 während des zweiten und des vierten Zeitabschnitts tf in Abwärtsrichtung DL zugeordnet.

Während für TDD zwischen Aufwärtsrichtung UL und Abwärtsrichtung DL ein Umschalten zwischen Sender und Empfänger erforderlich ist, ist für Halbduplex-FDD zusätzlich ein Umschalten von wenigstens einer Frequenz von dem unteren zu dem oberen Frequenzband F1, F2 erforderlich. Die Kombination gemäß dem Zuweisungsschema bietet sowohl die Vorteile von TDD mit Blick auf z.B. das Adaptieren einer Asymmetrie des Verkehrs, mit einer leichten Kanalschätzung aufgrund der Kanal-Reziprozität als auch die Vorteile eines Systems gemäß FDD mit wohldefinierten Interferenzbedingungen.

Gemäß diesem Basisschema bzw. darauf aufbauend ist eine Vielzahl von Modifikationen möglich. Figur 2 zeigt beispielsweise einen Fall, bei dem nicht jeder zweite Zeitabschnitt tf in den beiden Frequenzbändern F1 bzw. F2 im Wechsel zueinander für Übertragungen gemäß TDD verwendet wird, sondern eine geringere Anzahl von Zeitabschnitten. Insbesondere kann die Zuweisung variabel entsprechend den momentanen Verkehrsbedingungen und Auslastungen des Systems durchgeführt werden. Dargestellt ist gemäß Figur 2 beispielsweise eine Zuweisung des vollständigen ersten Zeitabschnitts tf im zweiten Frequenzband F2 für Übertragungen gemäß TDD in Abwärtsrichtung, während der dritte Zeitabschnitt tf des zweiten Frequenzbandes F2 eine Untergliederung des Zeitabschnitts tf in einen ersten Unterzeitabschnitt tf* für Übertragungen gemäß FDD und einen zweiten Unterzeitabschnitt tf** für Übertragungen gemäß TDD in Abwärtsrichtung DL vorsieht und den Zeitraum ts für Übertragung in der untergeordneten Übertragungsrichtung ug. Im ersten Frequenzband F1 wird beispielsweise nur der vierte Zeitabschnitt tf für Übertragungen gemäß TDD in Aufwärtsrichtung UL und nur untergeordnet in Abwärtsrichtung DL zugewiesen. Während der ersten drei Zeitabschnitte tf erfolgt durchgehend eine Zuweisung der Ressourcen für Übertragungen gemäß Halbduplex-FDD. Bei einer solchen Zuweisung erfolgt die Zuweisung der Ressourcen derart, dass für TDD-Verkehr weniger Kapazität zur Verfügung gestellt wird als für FDD-Verkehr. Die Symmetrie für den TDD-Verkehr wird dabei jedoch erhalten. Insbesondere findet in einem der beiden Frequenzbänder F1, F2 eine Übertragung gemäß Halbduplex-FDD statt, während in dem anderen der Frequenzbänder F2, F1 eine Übertragung gemäß TDD erfolgt. Aufgrund der vollständigen Orthogonalität jeder der Sub-Rahmen, welche durch die Zeitabschnitte tf gebildet werden, können die Zuweisungen von Ressourcen gemäß TDD oder FDD gemäß den momentanen Verkehrserfordernissen erfolgen. Bei einer Untergliederung eines der Zeitabschnitte tf in Unterzeitabschnitte tf*, tf** besteht die Möglichkeit, asymmetrische Verkehrserfordernisse durch das Ändern der TDD-Rahmendauer anzupassen, indem in dem nicht genutzten bzw. für TDD zeitlich nicht erforderlichen Teil FDD-Übertragung eingeplant wird.

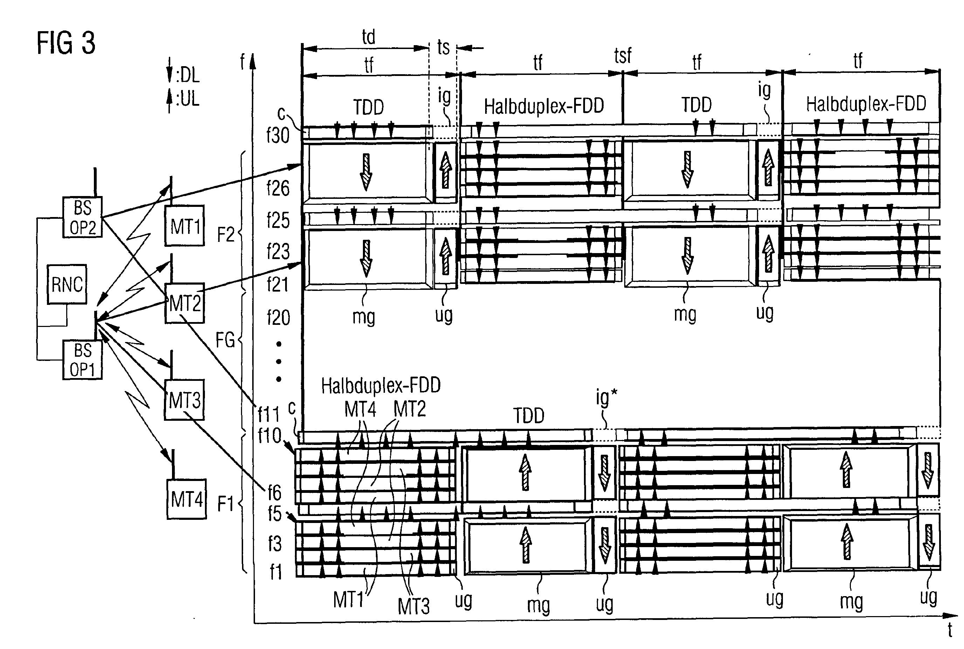

Fig. 3 zeigt beispielsweise eine Situation zweier Basisstationen BS, welche unterschiedlichen Betreibern OP1, OP2 zugeordnet sind. Jede der Basisstationen BS verfügt über jeweils ein erstes Frequenzband F1 und ein zweites Frequenzband F2 oder jeweils einen Anteil davon mit zugeordneten Sub-Frequenzbändern f1, ..., f5, f21, ..., f25 für die erste der Basisstationen BS und mit Sub-Frequenzbändern f6, ..., f10, f26, ..., f30 für die zweite der Basisstationen BS. Das Frequenz-Schutzband FG erstreckt sich in dieser Ausgestaltung der Erfindung über die Sub-Frequenzbänder f11, ..., f20.

Ermöglicht wird eine vollständig unabhängige Planung der Zuweisung von Ressourcen selbst für Basisstationen mit einem gemeinsamen Ort bzw. mit einander überdeckenden Funkzellen, wobei nur eine Synchronisierung zwischen den Betreibern bzw. deren Basisstationen sicherzustellen ist. Dies wird besonders einfach möglich, wenn eine feste Rahmenstruktur bzw. Zuordnung von Zeitabschnitten im Rahmen der Synchronisierung sichergestellt wird.

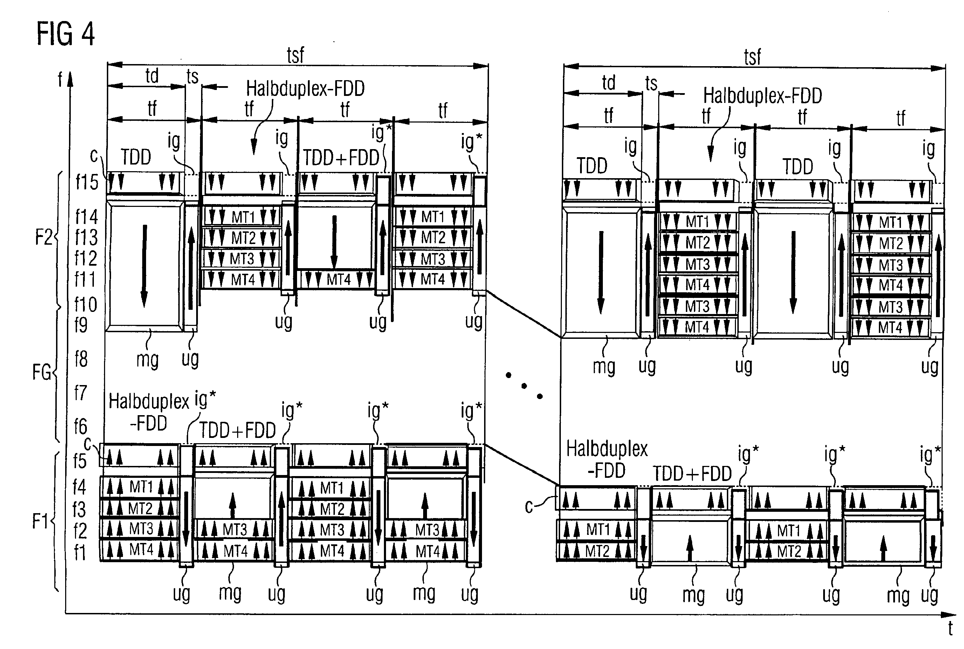

Fig. 4 zeigt weitere kombinierte oder einzeln mögliche Modifikationen. So wird der verfügbare Frequenzbereich des zweiten Frequenzbandes F2 für die Übertragungen gemäß TDD während des ersten Zeitabschnitts tf erweitert um zusätzliche Sub-Frequenzbänder f9, f10. Eine weitere Modifikation ist anhand des dritten Zeitabschnitts für das zweite Frequenzband F2 dargestellt. In diesem Zeitabschnitt tf werden nicht sämtliche Sub-Frequenzbänder für TDD zugewiesen, sondern eines der Sub-Frequenzbänder f11 wird für eine Übertragung durch die vierte mobile Station MT4 gemäß Halbduplex-FDD zugewiesen. Außerdem wird in dem zweiten und vierten Zeitabschnitt jeweils nur ein Teil der Sub-Frequenzbänder f3, f4 des ersten Frequenzbandes F1 für Übertragung gemäß TDD zugewiesen, während die übrigen Sub-Frequenzbänder f2, f1 für Übertragungen gemäß Halbduplex-FDD der dritten und vierten mobilen Station MT3, MT4 zugewiesen werden. Ermöglicht wird dadurch eine noch variablere Zuweisung von Ressourcen für Übertragungen gemäß TDD oder FDD sogar innerhalb eines einzelnen Zeitabschnitts tf, welcher ansonsten für Übertragungen gemäß TDD einsetzbar wäre. Die Möglichkeit den Frequenzbereich zu erweitern, insbesondere in das Frequenz-Schutzband FG hinein, wird insbesondere in Fällen möglich, in denen die mit verschiedenen Basisstationen BS kommunizierenden mobilen Stationen weit voneinander entfernt sind und keine signifikante wechselseitige Interferenz erzeugen.

Außerdem ist in Figur 4 dargestellt, dass auch eine Verlagerung des Frequenz-Schutzbandes FG innerhalb des verfügbaren Frequenzbereichs f möglich ist. So findet beispielsweise zu dem zeitlich späteren Zeitbereich, welcher in dem rechten Zuweisungsschema dargestellt ist, eine Verlagerung des Frequenz-Schutzbandes FG von dem Bereich der mittleren Sub-Frequenzbänder f6, f7, f8, f9, f10 auf niedrigere Sub-Frequenzbänder f4, f5, f6, f7, f8 statt. Dem ersten Frequenzband F1 für überwiegend Übertragungen in Aufwärtsrichtung UL stehen entsprechend nur noch die Sub-Frequenzbänder f1, f2, f3 zur Verfügung, während dem zweiten Frequenzband F2 die Sub-Frequenzbänder f9, f10, f11, f12, f13, f14, f15 für die Zuweisung von Ressourcen zur Übertragung überwiegend in Abwärtsrichtung DL zur Verfügung stehen.

Allgemein wird somit eine Verfahrensweise vorgeschlagen, bei der Halbduplex-FDD und TDD zu einer gesamtheitlichen und integrierten Lösung kombiniert werden. Bei dem Ansatz eines integrierten TDD zuzüglich FDD werden zwei asymmetrische TDD-Bänder in jeweils zwei insbesondere Halbduplex-FDD-Bänder F1, F2 eingegliedert, was garantiert, dass ungünstige Interferenzzustände wie eine Basisstations-Basisstations-Interferenz für TDD vermieden werden kann, wie dies ähnlich von FDD-Übertragungen bekannt ist. Durch ein entsprechendes Handhaben des unteren und des oberen der beiden FDD-Frequenzbänder F1, F2 wird auch für TDD eine Anpassung an symmetrische und auch an asymmetrische Verkehrsbedingungen ermöglicht.

Aufgrund der geringen Übertragungskapazität in der umgekehrten Übertragungsrichtung innerhalb eines jeden der Frequenzbänder wird der maximale Verlust an Gesamtübertragungskapazität in dem jeweiligen Frequenzband sehr gering gehalten. Ein Verlust von Übertragungskapazität entstünde nur, wenn ausschließlich FDD-Stationen zu unterstützen wären, und dadurch die kurzen Zeiträume ts für Übertragung in der untergeordneten Übertragungsrichtung ug vollständig ungenutzt blieben.

Schlechte Interferenzbedingungen können bei einem solchen Ansatz weder für FDD noch für TDD entstehen. Ermöglicht wird eine unabhängige Planung von Ressourcen selbst für Basisstationen mit gleichem Standort verschiedener Betreiber oder mit verschiedenen Ressourcen-Management-Einrichtungen.

Da TDD vorzugsweise für Übertragungen im Kurzbereich verwendet wird, das heißt Interferenzzustände sind geringer als für übliche FDD-Systeme, kann die TDD-Bandbreite in einem gewissen Maß erweitert werden. Auch eine langfristige Anpassung der TDD-Asymmetrie ist möglich, indem das Frequenz-Schutzband FG zwischen den verfügbaren Frequenzbereichen des unteren und des oberen Bandes entsprechend verschoben wird, wobei die Annahme einer gleichen Gesamtbandbreite unterstellt wird. Eine derartige Verschiebung des Frequenz-Schutzbandes FG ist gemäß Figur 4 beim Übergang vom linken auf das rechte Zuweisungsschema erfolgt.

Ein Mehrteilnehmer-Halbduplex-FDD-Ansatz wird inhärent angenommen, bei dem die Halbduplex-Frequenzbänder durch geeignete Zeitplanungen für jede mobile Station vollständig gefüllt werden, so dass alle FDD-Datenpakete bei der entsprechenden Basisstation in einer vorzugsweise perfekten sequenziellen Reihenfolge empfangen werden. Vorzugsweise ist sowohl bei Übertragungen in Abwärtsrichtung DL als auch bei Übertragungen in Aufwärtsrichtung UL zumindest ein schmales FDD-Band in Form des Steuerkanals c verfügbar, auf welches durch alle mobilen Stationen MT1, MT2, MT3, MT4 entweder für eine schnelle Rückübertragung von z.B. ARQ-Mitteilungen, MIMO-Rückmitteilungs-Information etc. oder für eine Steuerungsinformation zugegriffen werden kann.

Zusätzlich kann ein Herunter-Abtasten (Down-Sampling) für mobile Stationen nahe einer Zellgrenze vorgesehen werden oder für sich schnell bewegende mobile Stationen. Dadurch wird die Bandbreite herabgesetzt, so dass das Signal-zu-Rausch-Verhältnis zunimmt, wobei das Schutzintervall vergrößert wird. Demzufolge kann eine einfache Anpassung des physikalischen Funkkanals durchgeführt werden.

## Patentansprüche

1. Verfahren zum Zuweisen von Ressourcen auf Frequenzbänder (F1, F2) eines Funkkommunikationssystems, bei dem
- Ressourcen eines ersten und eines zweiten zweier zueinander beabstandeter FDD-Frequenzbänder (F1, F2) für Übertragungen mittels eines TDD-Übertragungsverfahrens zugewiesen werden,
**dadurch gekennzeichnet, dass**
- die Ressourcen im ersten FDD-Frequenzband (F1) für Übertragungen gemäß FDD in Aufwärtsrichtung (UL) und für Übertragungen gemäß TDD überwiegend in Aufwärtsrichtung (UL) als übergeordneter Übertragungsrichtung (mg) und untergeordnet in Abwärtsrichtung (DL) als untergeordneter Übertragungsrichtung (ug) zugewiesen werden und
- die Ressourcen im zweiten FDD-Frequenzband (F2) für Übertragungen gemäß FDD in Abwärtsrichtung (DL) und für Übertragungen gemäß TDD überwiegend in Abwärtsrichtung (DL) als übergeordneter Übertragungsrichtung (mg) und untergeordnet in Aufwärtsrichtung (UL) als untergeordneter Übertragungsrichtung (ug) zugewiesen werden,
- wobei für Zeiträume (ts) einer Zuweisung von Ressourcen für eine der untergeordneten Übertragungsrichtungen (ug) im ersten und im zweiten Frequenzband (F1, F2) keine Ressourcen für Übertragungen gemäß FDD in entgegengesetzter Übertragungsrichtung zu dieser untergeordneten Übertragungsrichtung (ug) zugewiesen werden.

2. Verfahren nach Anspruch 1, bei dem während der Zeiträume (ts) der Zuweisung von Ressourcen für eine der untergeordneten Übertragungsrichtungen (ug) im ersten und im zweiten Frequenzband (F1, F2) nur Ressourcen für Übertragungen gemäß TDD zugewiesen werden.

3. Verfahren nach einem vorstehenden Anspruch, bei dem das derartige Zuweisen der Ressourcen für die untergeordnete Übertragungsrichtung (ug) unter Berücksichtigung aller Sub-Frequenzbänder (f1, f2, ..., f14, f15) des ersten und des zweiten Frequenzbands (F1, F2) synchronisiert durchgeführt wird.

4. Verfahren nach einem vorstehenden Anspruch, bei dem Sub-Frequenzbänder (f1, ..., f5, f21, ..., f25, f6, ..., f10, f26, ..., f30) verschiedener Basisstationen (BS) mit überlappenden Sendebereichen und mit eigenständiger Ressourcenzuweisung durch deren Betreiber (OP1, OP2) bezüglich der Zuweisung der Ressourcen für die untergeordneten Übertragungsrichtungen (ug) zueinander synchronisiert betrieben werden.

5. Verfahren nach einem vorstehenden Anspruch, bei dem für Übertragungen gemäß TDD in der untergeordneten Übertragungsrichtung (ug) nur zeitlich aufeinanderfolgend bis zu 20%, insbesondere bis zu 10% der Ressourcen im Vergleich zu Übertragungen gemäß TDD in der entgegengesetzten übergeordneten Übertragungsrichtung (mg) zugewiesen werden.

6. Verfahren nach einem vorstehenden Anspruch, bei dem jeweils ein Sub-Frequenzband (f5, f15) des ersten und des zweiten Frequenzbandes (F1, F2) als ein FDD-Steuerkanal (c) zugewiesen wird.

7. Verfahren nach Anspruch 6, bei dem während einer zeitlich gleichzeitigen Zuweisung von weiteren Sub-Frequenzbändern (f1, f2, f3, f4, f11, f12, f13, f14) für die untergeordnete Übertragungsrichtung (ug) gemäß TDD der Steuerkanal (c) entweder als Untätigkeitslücke (ug) ungenutzt gelassen wird oder für eine Übertragung (ig*) gemäß TDD zugewiesen wird.

8. Verfahren nach einem vorstehenden Anspruch, bei welchem im jeweiligen Frequenzband (F1; F2) Ressourcen für Übertragungen gemäß TDD in der übergeordneten Übertragungsrichtung (mg) für einen Teil von Sub-Frequenzbändern (f3, f4; f12, f13, f14) zugewiesen werden und für Übertragungen gemäß FDD in der jeweils gleichen Übertragungsrichtung innerhalb des Frequenzbandes (F1; F2) weitere der Sub-Frequenzbänder (f1, f2; f11) zugewiesen werden.

9. Verfahren nach einem vorstehenden Anspruch, bei dem Ressourcen eines Frequenz-Schutzbandes (FG) zwischen dem ersten und dem zweiten Frequenzband (F1, F2) zeitweilig für TDD-Übertragungen als zusätzliche Sub-Frequenzbänder (f9, f10) zugewiesen werden.

10. Verfahren nach einem vorstehenden Anspruch, bei dem unter Verschiebung eines Frequenz-Schutzbandes (FG) zwischen dem ersten und dem zweiten Frequenzband (F1, F2) dem ersten Frequenzband (F1) zeitweilig weniger Sub-Frequenzen (f1, f2, f3) zugewiesen werden als Sub-Frequenzen (f9, f10, f11, f12, f13, f14, f15), welche dem zweiten Frequenzband (F2) zugewiesen werden.

11. Verfahren nach einem vorstehenden Anspruch, bei dem innerhalb eines Zeitabschnitts (tf) ein Unterzeitabschnitt (tf*) für Übertragungen gemäß FDD, ein Unterzeitabschnitt (tf**) für Übertragungen gemäß TDD in der übergeordneten Übertragungsrichtung (mg) und ein Zeitraum (ts) für Übertragungen gemäß TDD in der untergeordneten Übertragungsrichtung (ug) zugewiesen wird.

12. Verfahren nach einem vorstehenden Anspruch, bei dem Übertragungen gemäß FDD für Halbduplex-FDD-Übertragungen zugewiesen werden.

13. Netzvorrichtung mit einer Steuereinrichtung (RNC) zum Zuweisen von Ressourcen in einem Funkkommunikationssystem mittels eines Verfahrens nach einem vorstehenden Anspruch.

14. Teilnehmerstation zum Betrieb mittels TDD in einem Funkkommunikationssystem, mit Mitteln zum Belegen von mittels eines Verfahrens nach einem der Ansprüche 1 bis 12 zugewiesenen Ressourcen.
